(19) **Europäisches Patentamt**
**European Patent Office**
**Office européen des brevets**

(11) **EP 3 078 635 B1**

(12) **EUROPEAN PATENT SPECIFICATION**

(45) Date of publication and mention
of the grant of the patent:
**31.10.2018 Bulletin 2018/44**

(51) Int Cl.:
*C01C 1/00* ^(2006.01)   *G01N 3/00* ^(2006.01)
*B01D 53/04* ^(2006.01)   *B01J 20/02* ^(2006.01)
*B01J 20/34* ^(2006.01)

(21) Application number: **15001018.9**

(22) Date of filing: **09.04.2015**

(54) **REDUCING EXPANSION FORCES CREATED BY AMMONIA STORAGE MATERIALS**

REDUZIERUNG VON EXPANSIONSKRÄFTEN , DIE DURCH AMMONIAKSPEICHERMATERIALIEN ERZEUGT WERDEN

RÉDUCTION DES FORCES D'EXPANSION CRÉÉES PAR DES MATÉRIAUX DE STOCKAGE DE L'AMMONIAC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2016 Bulletin 2016/41**

(73) Proprietor: **Amminex Emissions Technology A/S 2860 Søborg (DK)**

(72) Inventors:
• **Thomsen, Lasse Bjørchmar**
**DK-2770 Kastrup (DK)**
• **Quaade, Ulrich J.**
**DK-2880 Bagsværd (DK)**

• **Johansen, Johnny**
**DK-2300 København (DK)**
• **Bialy, Agata**
**DK-3650 Ølstykke (DK)**
• **Johannessen, Tue**
**DK-2600 Glostrup (DK)**

(74) Representative: **Samson & Partner Patentanwälte mbB**
**Widenmayerstraße 6**
**80538 München (DE)**

(56) References cited:
**WO-A1-2014/023841     US-A1- 2011 284 121**
**US-A1- 2013 209 316**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to ammonia storage in a solid ammonia storage material and specifically to a method for controlling the magnitude of mechanical forces exerted by a solid ammonia storage material on walls of a container holding the storage material.

**Background of the invention**

Anhydrous ammonia is a widely used chemical with many applications. One example is the use as reductant for selective catalytic reduction (SCR) of NOx in exhaust gas from combustion processes.

For most end-user applications, and in particular in automotive applications, the storage of ammonia as pure, pressurized anhydrous ammonia in a pressure vessel is too hazardous. A storage method involving absorption of molecular ammonia in a solid material kept in a closed metal container can circumvent the safety hazard and enable the use of gaseous ammonia in any mobile or de-central application. In emissions technology, the use of direct ammonia gas dosing from cartridges/containers holding solid storage materials gives much better DeNOx potential via SCR catalysts than the conventional use of urea dissolved in water (for example, 32.5% urea dissolved in water, marketed under the trade name AdBlue®)- in particular for vehicles driving in cities with relatively low exhaust temperature.

Metal ammine salts are materials capable of reversible ammonia absorption/desorption, which can be used as solid storage medium for ammonia (see e.g. WO 2006/012903 A2). The material is delivered in metal containers (or so-called cartridges) to be integrated in a specific and well-defined packaging or installation volume on a vehicle and then the ammonia is gradually released for NOx reduction (EP 2181963 A1).

When such cartridges holding metal ammine complexes are used on a vehicle, they gradually become depleted of ammonia and degassed salt material remain in the metal cartridge. Cartridges must be saturated (resaturated) with ammonia in order to be used again. One-time-use of such a unit is too expensive and not a sustainable solution.

An industrially relevant application requires therefore that the cartridge holding the ammonia storage material can be saturated/resaturated many times. Comparing with - as example - propane bottles for barbeques, a customer does not buy a new propane tank (e.g. 80 Euro price) each time - but rather buys a tank a first time and then gets a refilled unit subsequently (10-15 Euro price).

Metal ammine complexes have been studied in the past years and it has turned out to be a challenging class of material. It requires in some cases additives or internal metal foil structure to get the proper heat transfer and it is a known fact that the salt crystal lattice can expand by e.g. a factor of four when absorbing ammonia.

Saturation or resaturation of depleted ammonia storage material in a metal container cannot be done practically on the vehicle since it takes much more than just a few minutes to resaturate (removal of absorption heat by cooling may take several hours) and it requires anhydrous ammonia available next to the vehicle. Consequently, the depleted cartridge must be resaturated before next use. To minimize the cost for the end-user, the saturation/resaturation process must be efficient and, even more importantly, allow for the cartridge/unit to be used many times.

Like in the case of recharging of electrical batteries, an important aspect of a process for cartridge refilling is avoiding degradation of the unit that over time would render the cartridge unusable. An observed physical effect that has a big impact on the cartridge durability is the expansion of the salt during saturation/resaturation. This expansion, which is also mentioned in WO 2010/025947 A1, leads to high mechanical forces which in turn may deform the metal wall of the cartridges or damage an internal structure for improving the heat transfer. Over several refilling/degassing cycles the shape or performance of the cartridge may degrade to a level where the cartridge will become unusable and the deformation will lead to no longer fitting in the volume or installation space intended for the cartridge. These expansion forces may to some extent be mitigated by making the cartridge wall very thick or significantly reducing the targeted storage density of the material (e.g. to less than 50% or 75% of the theoretical max. density). Thick-walled cartridges become both expensive and heavy while a significant reduction in the targeted storage density (reduced salt loading per unit volume) makes the cartridge industrially unattractive as an ammonia carrying unit because of poor utilization of the overall volume on the vehicle.

Consequently, a solution is needed that enables a combination of three industrially important parameters: high storage density, low weight and high durability (low cost-of-ownership). Unless all three are proven for an ammonia storage product, it is difficult to find a relevant place on the market that allows capturing the huge environmental benefits of being able to dose ammonia gas directly for optimal SCR NOx reduction.

WO 2014/023841 A1 describes a unit for storing gas by absorption or adsorption with a storage element having a compressible element in contact with the storage element designed to deform under the action of loads applied by the storage element during phases of storing and releasing gas from storage

US 2011/0284121 A1 describes a method for saturating or re-saturating ammonia storage capable of reversibly absorbing and desorbing ammonia in one or more storage containers, wherein said material is partly or fully depleted of ammonia. US 2013/0209316 A1 describes a method for estimating the degree of saturation of a reversible solid ammonia storage material in a storage unit.

## Summary of the invention

A method is provided for controlling the magnitude of mechanical forces exerted by a solid ammonia storage material on walls of a container holding the storage material inside its interior volume when the storage material is undergoing saturation/resaturation with ammonia inside said storage container according to claim 1. The method comprises:

a. determining a limit for the mechanical strength of the container in terms of a hydraulic pressure, hereinafter $P_{LIMIT}$, or a hydraulic force, hereinafter $F_{LIMIT}$, in its interior volume under which the walls of container do not undergo plastic deformation, or do not undergo deformation of more than 110%, 120%, 150%, or 200% of a deformation at a yield point of the container walls;
b. using a relationship, between

i. a temperature for ammonia saturation/resaturation process of the storage material, hereinafter $T_{SAT}$, and
ii. the hydraulic pressure $P_{MAT}$, or equivalent mechanical force $F_{MAT}$ generated by the storage material during saturation/resaturation at said temperature $T_{SAT}$,

to identify a minimum temperature, hereinafter $T_{SATMIN}$, of the saturation/resaturation process where $P_{MAT}$, or $F_{MAT}$, exerted by the storage material is kept below the limit for the mechanical strength in terms of $P_{LIMIT}$, or $F_{LIMIT}$, of the container by carrying out the saturation/resaturation process at the temperature $T_{SAT}$ fulfilling the condition of $T_{SAT} \geq T_{SATMIN}$, the relationship being established by an experimental mapping procedure in which experimental data points are obtained, or via computer simulations.

A method (not claimed) of designing a container for accommodating solid ammonia storage material where a process temperature for ammonia saturation/resaturation $T_{SAT}$ and a target density of the storage material, $D_{MAT}$ are fixed, and the outcome of the design method is a container design capable of withstanding a resulting exerted pressure from the material, $P_{MAT}$, or force $F_{MAT}$, upon ammonia saturation/resaturation. A known relation between $D_{MAT}$, $T_{SAT}$, and $P_{MAT}$, or $F_{MAT}$, is used to establish a value of $P_{MAT}$, or $F_{MAT}$, and this value is used for the design of the container such that its mechanical strength measured in terms of a hydraulic-limit parameter $P_{LIMIT}$, or $F_{LIMIT}$, under which walls of the container do not undergo plastic deformation, or do not undergo deformation of more than 110%, 120%, 150%, or 200% of a deformation at a yield point of the container walls, is equal to or exceeds the value of $P_{MAT}$, or $F_{MAT}$.

A container filled with a solid ammonia storage material with a storage density, $D_{MAT}$, capable of desorbing and absorbing/reabsorbing ammonia, has a mechanical strength corresponding to a limit-pressure parameter, $P_{LIMIT}$, or limit-force parameter $F_{LIMIT}$, at which pressure, or force, inside the container the container does not undergo plastic deformation, or do not undergo deformation of more than 110%, 120%, 150%, or 200% of a deformation at a yield point of the container walls. The storage material in the container is filled with ammonia by a saturation/re-saturation process in which the saturation/resaturation of the storage material is performed with the storage material inside the container at a process temperature, $T_{SAT}$, fulfilling the condition $T_{SAT} \geq T_{SATMIN}$. $T_{SATMIN}$ is a minimum temperature of the saturation/resaturation process where $P_{MAT}$, or $F_{MAT}$, exerted by the storage material is kept below the limit for the mechanical strength in terms of $P_{LIMIT}$, or $F_{LIMIT}$, of the container.

A correlation between a temperature for ammonia saturation/resaturation process, $T_{SAT}$, of an ammonia storage material and the hydraulic pressure, $P_{MAT}$, or equivalent mechanical force, $F_{MAT}$, generated by the storage material during saturation/resaturation at said temperature $T_{SAT}$, is used to influence the level of force or pressure exerted by the storage material by carrying out the saturation/resaturation at a temperature where the resulting pressure, $P_{MAT}$, or force, $F_{MAT}$, exerted by the storage material is kept below a limit under which the container does not undergo plastic deformation, or does not undergo deformation of more than 110%, 120%, 150%, or 200% of a deformation at a yield point of the container walls.

Features of the invention presented herein are inherent in the methods disclosed or will become apparent to those skilled in the art from the following detailed description of embodiments and its accompanying drawings.

## General description, also of optional embodiments of the Invention

It is noted that pressure and force are linked in the normal mechanical way; i.e. pressure is force exerted per unit area.

It has been discovered that the forces created by crystal expansion and thus the mechanical forces of metal ammine complexes while absorbing/reabsorbing ammonia can be described conceptually as a hydraulic pressure exerted by a fluid. More importantly - and the key to the current invention - it has been discovered that this mechanical force, $F_{MAT}$, or the equivalent hydraulic pressure, $P_{MAT}$, is strongly correlated with the temperature level of the ammonia storage material during its saturation or resaturation. It is observed that when saturation/resaturation temperature is increased then $P_{MAT}$ is reduced.

In addition, there is link between the forces (or pressure) and the density of material, $D_{MAT}$, in the unit holding or confining the ammonia storage material. An increase in density - all other parameters kept identical - leads to a potential for higher force.

Although a conclusive scientific explanation is not yet available, a qualitative reasoning behind the discovery of the present invention is the following: Materials such as butter are very stiff at low temperature but become softer when the temperature is increased. When the material is softer it is difficult to have long-distance forces created by the material. If a fork is pushed towards soft (warm) butter, it enters the butter relatively easily. If the butter is very cold, the fork can hardly enter the butter and the push on the fork towards the butter rather results in moving the butter. This analogy can be used for explaining the present discovery. When the material is warm, the local expansion forces of the crystal structure when it absorbs ammonia are not transferred over long length scale (centimeters) but rather dissipated locally in the material at much smaller length scale. With a stiffer material - i.e. at lower temperatures - the forces can have long-scale effects and thereby exert the forces (or a corresponding pressure) at a high level on the walls of the container.

In the present description, this aspect is utilized in an innovative and constructive manner to achieve the target of the invention: a method for obtaining a robust, durable product having attractive properties and cost for the customer.

It is noticed from the results shown from the present invention that suitable levels of reduced material forces (pressure) are typically seen at saturation temperatures, $T_{SAT}$, above room temperature. Since the resaturation (or saturation) process needs active cooling in order to make a fast and efficient saturation process, one would normally use the approach of "as cold as possible" to speed up the refilling process. Contrary to this intuitive approach, the method of the present invention has its most attractive features when cooling is done with warm fluid.

In the present description this aspect is applied to achieve a combination of a durable ammonia storage cartridge with attractive properties and a cost-effective refill process.

When the ammonia storage material is undergoing saturation/resaturation with ammonia inside said storage container, the method comprises reducing expansion forces of solid ammonia storage metal ammine complexes capable of reversibly absorbing and desorbing ammonia when confined in one or more metal containers, wherein said material, when undergoing saturation or resaturation with ammonia, is kept at process conditions that reduces the magnitude of the expansion forces to a level that eliminates or reduces deformation of the metal container itself that encapsulates the material.

In some embodiments, the determination of $T_{SATMIN}$ uses the correlation between $T_{SAT}$ and $P_{MAT}$, or $F_{MAT}$, and also includes a correlation with the density of the ammonia storage material $D_{MAT}$ where $D_{MAT}$ is calculated based on the ammonia storage material being fully saturated with ammonia.

In some embodiments a liquid cooling media is used during saturation/restauration, and there is an upper limit on $T_{SAT}$, for practical reasons, defined by the boiling point of the cooling media ($T_{CMBP}$, cooling media boiling point) such that $T_{CMBP} \geq T_{SAT} \geq T_{SATMIN}$. For example, $T_{CMBP}$ is about 100° C.

In other embodiments the ammonia storage material is cooled during the saturation/resaturation process by a gaseous cooling media. The saturation/resaturation process at the temperature $T_{SAT}$ fulfills the condition $T_{CMBP} \geq T_{SAT} \geq T_{SATMIN}$, where $T_{CMBP}$ is an upper limit on the temperature at which the saturation/resaturation process is performed cooled by the gaseous cooling media. For example, also in that case $T_{CMBP}$ may be about 100° C.

In some embodiments the method is based on a mechanical strength ($P_{LIMIT}$, $F_{LIMIT}$) being derived from official legislation targets, such as the target included in the United Nations standardization document ST/SG/AC.10/C.3/88, 12 December 2013, "Report of the Sub-Committee of Experts on the Transport of Dangerous Goods on its forty-fourth session", Chapter 3.3, according to which each receptacle containing adsorbed or absorbed ammonia shall be able to withstand the pressure generated at 85° C with a volumetric expansion no greater than 0.1 %, wherein the pressure at a temperature of 85° C is less than 12 bar. Hence, in some of these embodiments the ammonia storage container has a mechanical strength which enables the container to withstand the pressure generated by desorbed ammonia at 85° C with a volumetric expansion no greater than 0.1 volume-%.

In some embodiments, $P_{LIMIT}$, or $F_{LIMIT}$, and subsequently $T_{SATMIN}$, are determined from:

a. having an existing container design available,
b. knowing from the existing design the value of $P_{LIMIT}$, or $F_{LIMIT}$, or using (i) standard mechanical engineering practice, (i) hydraulic pressure measurements, or (iii) mechanical simulations to identity the value of $P_{LIMIT}$, or $F_{LIMIT}$,
c. using the known or identified $P_{LIMIT}$, or $F_{LIMIT}$, to determine the loading density $D_{MAT}$ and saturation/resaturation

condition $T_{SAT} \geq T_{SATMIN}$, or $T_{CMBP} \geq T_{SAT} \geq T_{SATMIN}$, to prevent $P_{MAT}$, or $F_{MAT}$, from exceeding $P_{LIMIT}$, or $F_{LIMIT}$.

In some embodiments the procedure of determining $T_{SATMIN}$ includes an experimental mapping procedure in which experimental data points are obtained to establish an empirical relationship or correlation between the dependent variable $P_{MAT}$, and the independent variable $T_{SAT}$. The mapping procedure comprises:

 a. preparing at least one sample of ammonia storage material;
 b. carrying out ammonia desorption and resaturation experiments in a sample holder capable of measuring $P_{MAT}$ exerted by the material on the walls of the sample holder when it the material is undergoing saturation/re-saturation, said procedure being carried out at different temperature levels $T_{SAT}$;
 c. using the experimental data points to generate a function or interpolation formula $P_{MAT} = f(T_{SAT})$, or $F_{MAT} = f(T_{SAT})$.

Alternatively, in some embodiments in which different densities $D_{MAT}$ are taken into account, the procedure of determining $T_{SATMIN}$ includes an experimental mapping procedure in which experimental data points are obtained to establish an empirical relationship or correlation between the dependent variable $P_{MAT}$, or $F_{MAT}$, and the independent variables $T_{SAT}$ and $D_{MAT}$. The mapping procedure comprises:

 a. preparing at least one sample of ammonia storage material with known density $D_{MAT}$;
 b. carrying out ammonia desorption and resaturation experiments in a sample holder capable of measuring $P_{MAT}$ exerted by the material on the walls of the sample holder when it the material is undergoing saturation/re-saturation, said procedure being carried out at different temperature levels $T_{SAT}$;
 c. using the experimental data points to generate a function or interpolation formula $P_{MAT} = f(T_{SAT}, D_{MAT})$, or $F_{MAT} = f(T_{SAT}, D_{MAT})$ in the case where samples with different densities $D_{MAT}$ are measured.

In a variant of the embodiments mentioned above the procedure of determining $T_{SATMIN}$ is done by creating the relationship between $P_{MAT}$, or $F_{MAT}$, and $T_{SAT}$, and optionally $D_{MAT}$ via computer simulations using parameters describing the ammonia storage material, ammonia itself and the material in saturated form. Said parameters describe the state of the material in saturated and unsaturated form, the influence of these parameters as a function of temperature and with input of density of the material the model can estimate or predict the level of the dependant variable, $P_{MAT}$, (or $F_{MAT}$) based on the input variables like density, material parameters and saturation temperature. Such a computer model can be structured in different ways and an example is to use traditional finite element method (FEM) simulation.

It may be advantageous to increase the temperature $T_{SAT}$ significantly above $T_{SATMIN}$ to make up for a relatively weak cartridge design, or where a high density is attractive, or in the case where the duration of the saturation process is of less or no importance.

Even if very high reduction of forces can be obtained at temperatures above 60-80° C it may be advantageous to keep a lower temperature (closer to $T_{SATMIN}$) where the reduction of forces is sufficient thereby allowing a better thermal gradient between storage material absorbing ammonia when subjected to the pressure $P_{SAT}$ to decrease the process duration. Typically, the ammonia gas pressure, $P_{SAT}$, needs to be at least high enough to give a gradient corresponding to at least 10° C difference relative to the equilibrium temperature of the storage material when exposed to the pressure $P_{SAT}$. Example: At 55° C the equilibrium desorption pressure of ammonia from the solid storage material is approx. 2.5 bar (for $SrCl_2$) and using $P_{SAT}$ = 2.5 bar would give an absorption rate equal to zero since there is no driving force for absorption and thereby no heat to be removed.

The process condition, $T_{SAT}$, and target density of the storage material, $D_{MAT}$, may initially be fixed, e.g. by existing hardware requirements; the outcome is a container design capable of withstanding the resulting exerted pressure, or force, from the material, $P_{MAT}$, or $F_{MAT}$, upon ammonia saturation/resaturation:

 a. knowing the temperature $T_{SAT}$ and the target density of the storage material, $D_{MAT}$;
 b. using a known relation between $D_{MAT}$, $T_{SAT}$, and $P_{MAT}$, or $F_{MAT}$, to establish a value of $P_{MAT}$, or $F_{MAT}$, and use this value for the design of the container such that its mechanical strength measured in terms of a hydraulic-limit parameter $P_{LIMIT}$, or $F_{LIMIT}$, under which walls of the container do not undergo plastic deformation, or do not undergo deformation of more than 110%, 120%, 150%, or 200% of the deformation at the yield point of the container walls, is equal to or exceeds the value of $P_{MAT}$, or $F_{MAT}$.

The container for storing a solid ammonia storage material with a storage density, $D_{MAT}$, capable of desorbing and (re)absorbing ammonia, may have a mechanical strength corresponding to a limit-pressure parameter, $P_{LIMIT}$, or limit-force parameter $F_{LIMIT}$, at which pressure, or force, inside the container the container does not undergo plastic deformation, or does not undergo deformation of more than 110%, 120%, 150%, or 200% of the deformation at the yield point of the container walls. The storage material in the container has been filled with ammonia by a saturation/re-saturation process in which the saturation/resaturation of the storage material has been performed with the storage material inside the container at a process temperature, $T_{SAT}$, fulfilling the condition $T_{SAT} \geq T_{SATMIN}$, where $T_{SATMIN}$ is the minimum temperature of a saturation/resaturation process where $P_{MAT}$, or $F_{MAT}$, exerted by the storage material is kept below the limit for the mechanical strength in terms of $P_{LIMIT}$, or $F_{LIMIT}$, of the container.

The correlation or relation between a temperature for ammonia saturation/resaturation process, $T_{SAT}$, and - optionally - also the storage density, $D_{MAT}$, of an ammonia storage material, and the hydraulic pressure, $P_{MAT}$, or equivalent mechanical force, $F_{MAT}$, generated by the storage material during saturation/resaturation at said temperature $T_{SAT}$, is used for the design or manufacture of containers storing a material capable of ammonia absorption, more specifically , to influence the level of force or pressure exerted by the storage material by carrying out the saturation/re-saturation at a temperature where the resulting pressure, $P_{MAT}$, or force, $F_{MAT}$, exerted by the storage material is kept below a limit under which the container does not undergo plastic deformation, or does not undergo deformation of more than 110%, 120%, 150%, or 200% of the deformation at the yield point of the container walls;.

It is noted that the methods described herein are also advantageous for preparing the initial product, i.e. a container/cartridge which is charged with ammonia by in-situ saturation of storage material. By avoiding all the complicated process conditions mentioned in WO 2010/025947 A1, the present invention enables simplified production of an in-situ saturated cartridge where not-yet-saturated storage material is placed inside the cartridge prior to a first saturation and is saturated for the first time inside the (metal) cartridge shell.

**Brief description of the drawings**

Exemplary embodiments are now described, also with reference to the accompanying drawings, wherein

Fig. 1 shows the material expansion pressure, $P_{MAT}$, during ammonia saturation plotted against the cooling medium temperature, $T_{SAT}$;

Fig 2 shows data points and a resulting model correlation between $P_{MAT}$ and different combinations of $T_{SAT}$ and $D_{MAT}$;

Fig. 3 shows the normalized deformation of an ammonia storage container versus the number of resaturation cycles;

Fig. 4 shows an illustration of elastic and plastic deformation;

Fig. 5 shows an example of a process for resaturation storage material with ammonia inside containers with appropriate control of $T_{SAT}$:

Fig. 6 shows an example of a computer-simulation method to establish a relationship between $P_{MAT}$, or $F_{MAT}$, and $T_{SAT}$ and, if applicable, $D_{MAT}$, to determine $T_{SATMIN}$.

**Description of examples**

The temperature level, $T_{SAT}$, is determined by the temperature of the cooling media since the cartridges generate heat when ammonia is absorbing. Choosing different cooling media is possible while still fulfilling the $T_{SATMIN}$.

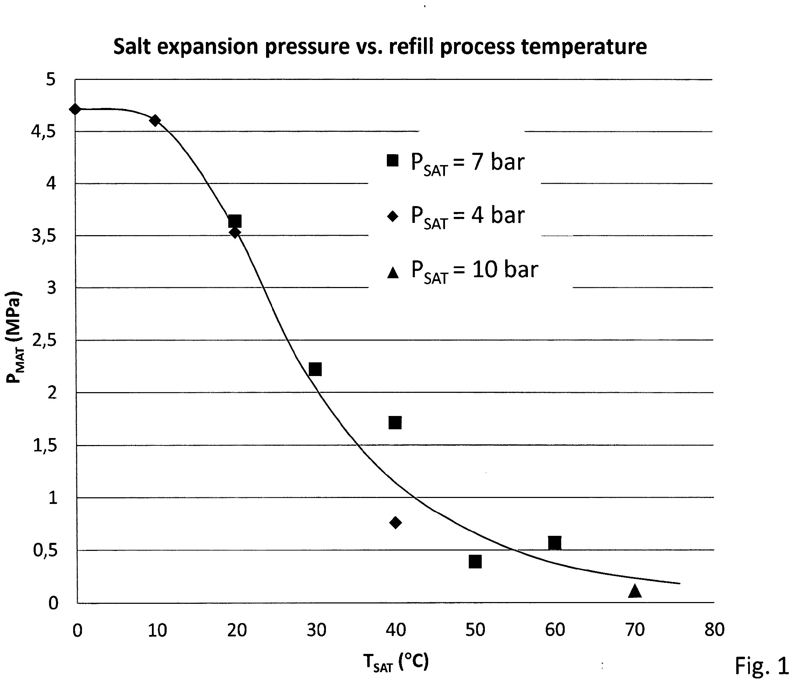

Fig. 1 shows the material expansion pressure, $P_{MAT}$, during ammonia saturation plotted against the cooling medium temperature, $T_{SAT}$, during saturation of a material sample kept in a container capable of monitoring the expansion pressure. The mechanical pressure exerted by the material depends strongly on temperature, $T_{SAT}$. The measurements are done for same sample but varying ammonia gas saturation pressures $P_{SAT}$. This shows that the effect of $P_{MAT}$ is strongly an effect of temperature and not the ammonia gas pressure.

Hence, Fig. 1 shows data points and an empirical correlation (based on the data points) between the temperature $T_{SAT}$ for the ammonia saturation/resaturation process of the storage material, and the hydraulic pressure $P_{MAT}$ (the equivalent mechanical force $F_{MAT}$ could be used in an equivalent manner) generated by the storage material during saturation/resaturation at said temperature $T_{SAT}$.

With a given limit for the mechanical strength of the given cartridge in terms of $P_{LIMIT}$, or $F_{LIMIT}$, under which the walls of cartridge do not undergo plastic deformation, or do not undergo deformation of more than 110%, 120%, 150%, or 200% of the deformation at the yield point of the container walls, a correlation of this type is used to identify a minimum temperature $T_{SATMIN}$ of the saturation/resaturation process where $P_{MAT}$, or $F_{MAT}$, exerted by the storage material is kept below the limit for the mechanical strength, of the cartridge. Having found $T_{SATMIN}$ the saturation/resaturation process is carried out at a temperature $T_{SAT}$ fulfilling the condition $T_{SAT} \geq T_{SATMIN}$.

Alternatively, the temperature $T_{SAT}$ at which the saturation/resaturation is performed may be predetermined and fixed. In this case the correlation of the type shown in Fig. 1 and described above is used for the design of a cartridge for the solid ammonia storage material capable of withstanding a resulting exerted pressure from the material, $P_{MAT}$, or force $F_{MAT}$. The relation between $T_{SAT}$, and $P_{MAT}$, or $F_{MAT}$, is used to find the value of $P_{MAT}$, or $F_{MAT}$, that corresponds to the given value of $T_{SAT}$. This found value of $P_{MAT}$, or $F_{MAT}$ is then used for the design of the cartridge such that the cartridge's mechanical strength measured in terms of a hydraulic-limit parameter $P_{LIMIT}$, or $F_{LIMIT}$, under which walls of the cartridge do not undergo plastic deformation, or do not undergo deformation of more than 110%, 120%, 150%, or 200% of the deformation at the yield point of the container walls, is equal to or exceeds the value of $P_{MAT}$, or $F_{MAT}$.

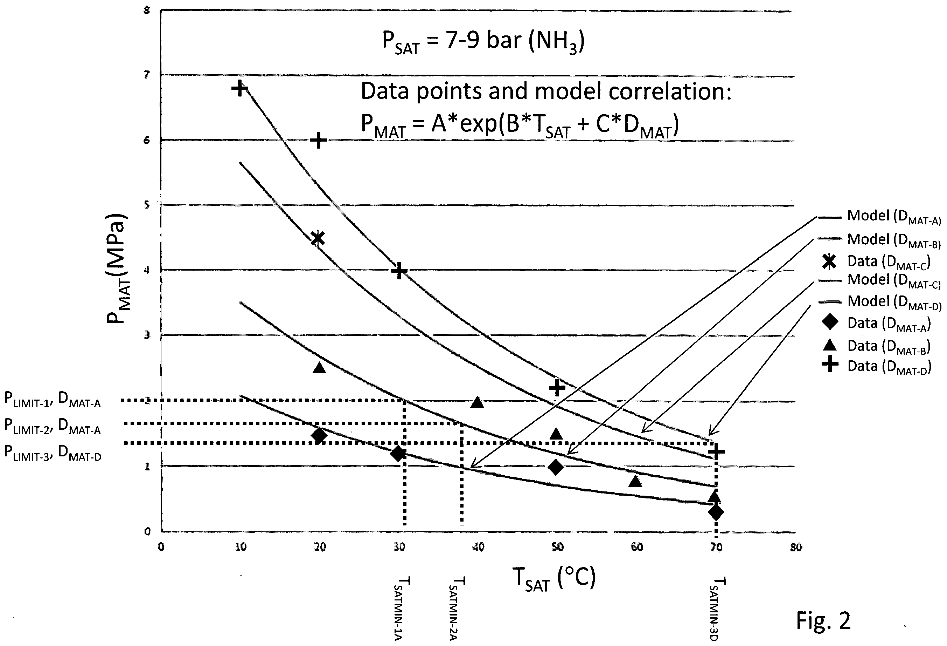

Fig 2 shows data points and a resulting empirical model correlation between $P_{MAT}$ and $T_{SAT}$ similar to Fig. 1, however for different ammonia-storage-material densities $D_{MAT}$, with $D_{MAT}$ being a parameter in the representation of $P_{MAT}$ as a function of $T_{SAT}$ of Fig. 2 for four different levels of $D_{MAT}$, labeled as "A" to "D" (A≈1.0 g/cm$^3$, B≈1.13 g/cm$^3$, C≈1.25 g/cm$^3$ and D≈1.3 g/cm$^3$). The ammonia storage material in degassed form is $SrCl2$, and $Sr(NH_3)_8Cl_2$ in fully saturated form. As a reference point, the density is calculated when the material is in its saturated form. For each density level there is a strong correlation with $T_{SAT}$. The model equation best describing the experimental model data done on small material samples is of the form $P_{MAT} = A*exp(B*T_{SAT} + C*D_{MAT})$, but any kind of mathematical representation giving a good data representation is envisaged. Three illustrations, labelled as $P_{LIMIT-1}$, $P_{LIMIT-2}$, and $P_{LIMIT-3}$, are made, where a certain $P_{LIMIT-3}$ is linked to another density $D_{MAT}$ than that of $P_{LIMIT-1}$ and $P_{LIMIT-2}$, and as a result the required saturation temperature, $T_{SATMIN}$, is located on the X-axis. To ensure that $P_{MAT}$ is not exceeding $P_{LIMIT}$ it can be seen that $T_{SAT}$ has to be equal to - or larger - than $T_{SATMIN}$, i.e. $T_{SAT} \geq T_{SATMIN}$.

With a given limit for the mechanical strength of the given cartridge in terms of $P_{LIMIT}$, or $F_{LIMIT}$, under which the walls of cartridge do not undergo plastic deformation, or do not undergo deformation of more than 110%, 120%, 150%, or 200% of the deformation at the yield point of the container walls, and a given target density $D_{MAT}$ of ammonia-storage material in the cartridge, a correlation of this type is used to identify a minimum temperature $T_{SATMIN}$ of the saturation/resaturation process where $P_{MAT}$, or $F_{MAT}$, exerted by the storage material is kept below the limit for the mechanical strength, of the cartridge. Having found $T_{SATMIN}$ for the given $P_{LIMIT}$ and $D_{MAT}$ the saturation/resaturation process is carried out at a temperature $T_{SAT}$ fulfilling the condition $T_{SAT} \geq T_{SATMIN}$.

Alternatively, the temperature $T_{SAT}$ at which method is performed may be predetermined and fixed. If one of various available target densities $D_{MAT}$ of ammonia-storage material in the cartridge is also given, the correlation of the type shown in Fig. 2 and described above is used for the design of a cartridge for the solid ammonia storage material capable of withstanding a resulting exerted pressure from the material, $P_{MAT}$, or force $F_{MAT}$. The relation between $T_{SAT}$, $D_{MAT}$, and $P_{MAT}$, or $F_{MAT}$, is used to find the value of $P_{MAT}$, or $F_{MAT}$, that corresponds to the given values of $T_{SAT}$ and $D_{MAT}$. The determined value of $P_{MAT}$, or $F_{MAT}$, is then used for the design of the cartridge such that the cartridge's mechanical strength measured in terms of a hydraulic-limit parameter $P_{LIMIT}$, or $F_{LIMIT}$, under which walls of the cartridge do not undergo plastic deformation, or do not undergo deformation of more than 110%, 120%, 150%, or 200% of the deformation at the yield point of the container walls, is equal to or exceeds the value of $P_{MAT}$, or $F_{MAT}$.

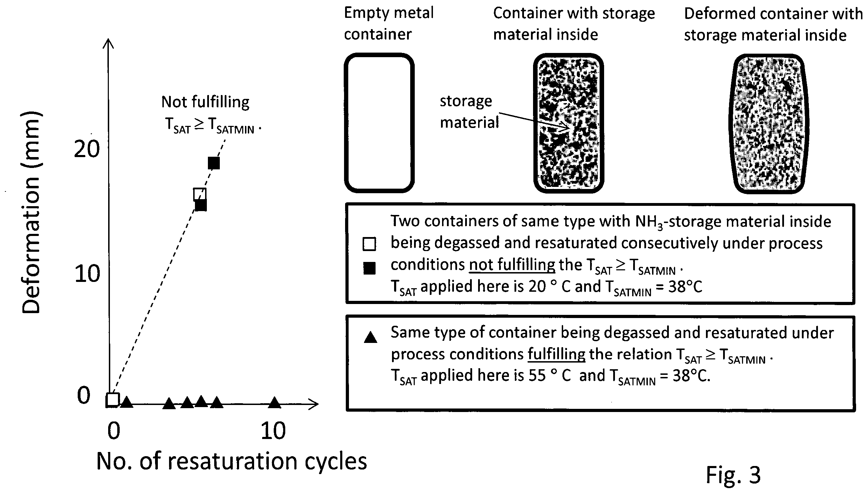

Fig. 3 shows proof of the features of the present invention. Data are shown for cartridges undergoing consecutive cycles of $NH_3$-degassing and NH3-resaturation. In this example, the tested cartridges are cylindrical and made of aluminum. In the specific design used in these cartridges, the end-caps represent the weakest point and are made to be able to withstand at least 1.7 MPa gas pressure without plastic deformation (i.e. $P_{LIMIT}$=1.7 MPa), corresponding to $P_{LIMIT-2}$ of Fig. 2. The ammonia-storage-material density is approx. 1.13 g/cm$^3$ in this example, which is supposed to correspond to $D_{MAT-A}$ in Fig. 2. Then it can be seen from figure 2 that the analysis gives $T_{SATMIN}$ at approx. 38°C. In the conventional resaturation process the ammonia gas pressure was approx. 7-8 bar, and a cooling media of water was kept at about 20 C ($T_{SAT} \approx 20°C$) to have fast cooling by removal of ammonia absorption heat from the cartridge, i.e. below $T_{SATMIN}$ (= 38°C). It is observed from the testing that even when these units are consistently operated at much lower pressure than $P_{LIMIT}$=1.7 MPa (desorption pressure for degassing: 2-4 bar; corresponding to 0.2 - 0.4 MPa; saturation pressure = 7-8 bar, corresponding to 0.7 - 0.8 MPa), the cartridge deforms inelastically even after only a few saturation cycles, and the cartridges can no longer be used even before reaching, e.g., ten refills since they do no longer fit in the installation volume. This is shown for two different units of same type.

Applying the method of the present invention to this example (*viz.* to a cartridge of the same type filled with the same storage material with the same density, i.e. the same $T_{SATMIN}$) the following has been found: The same test has been carried out, however with the cooling media kept at about 55 C ($T_{SAT} \approx 55°C$), i.e. above $T_{SATMIN} \approx 38°C$). The lower part of the graph on figure 3 shows degassing/refill cycles when the process and design constraint according to the method of the present invention is fulfilled. It is seen that fulfilling the saturation process condition (triangles) eliminates the massive plastic deformation observed after few cycles with the conventional method (the hollow and filled square points).

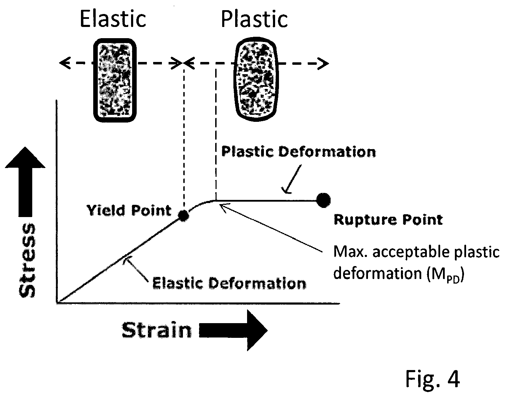

Figure 4 shows an exemplary illustration of the relationship between strain (deformation) and stress on a metal member, e.g. a container. Plastic deformation (also referred to as "inelastic deformation") of a container occurs when the stress created by the material gives a strain on the container wall that exceeds the level at the so-called yield point: The material deforms (strains) because of the stress (created by $F_{MAT}$, or $P_{MAT}$). When $T_{SAT} > T_{SATMIN}$, the stress created by the material is reduced and the container remains in the area of elastic deformation.

As schematically shown in Fig. 4, in the elastic-deformation regime the relation between stress and strain is nearly linear while in the plastic-deformation regime the strain-stress relation becomes nearly flat (meaning that the material continues to deform even if the stress is not increased). The transition between the linear and the flat relation typically has a continuously changing slope; i.e. the change is slope is not abrupt but extends over a finite strain range. The "yield point" is defined to be the stress at which a material begins to deform plastically; more specifically, the yield point is typically just before the transition from the linear to the flat part of the relation (when looking into the direction of increasing strain).

In some embodiments described herein the limit for the mechanical strength of the container in terms of the pressure, $P_{LIMIT}$, or the force, $F_{LIMIT}$, is defined to be the pressure, or the force, in the container's interior volume under which the walls of container do not undergo plastic deformation; i.e. there is no deformation beyond the yield point.

In other embodiments, however, a small degree of plastic deformation is acceptable; i.e. a strain beyond the yield point in the transition to the flat plastic-deformation regime before it becomes completely flat. In these embodiments the mechanical strength of the container in terms of the pressure, $P_{LIMIT}$, or the force, $F_{LIMIT}$, is defined to be the pressure, or force, that causes no deformation beyond a point in the transition region of the stress-strain diagram which is referred to as "maximum acceptable plastic deformation", or "$M_{PD}$". The point $M_{PD}$ is defined as the maximum degree of plastic deformation that is acceptable for a certain container after which is does no longer fit into the physical application for which it is intended. Ideally, there is no plastic deformation (as indicated in the pervious paragraph) but in some special circumstances a minor degree of plastic deformation can be accepted; in such cases the parameter $M_{PD}$ can be 110, 120, 150, or 200% of the strain (= deformation) at the yield point. For example, if a sample container of diameter 100mm can elastically deform by 0.5mm just below the yield point (which means that it would there still return to normal shape), then $M_{PD}$ in this case at a strain of 200% of the strain at the yield point would be at maximum 1 mm, and the resulting maximum diameter would be 101 mm.

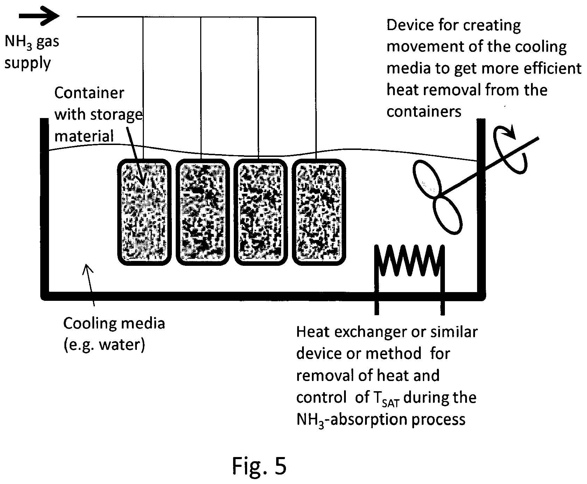

Figure 5 shows an example of resaturation of a plurality of containers filled inside with storage ammonia material of the sort described above. The storage containers are immersed in a trough filled with cooling media (e.g. cold water), and are thus cooled by the cooling media. The temperature of the cooling media is controlled with a suitable device for control of the temperature of the media to reach a targeted saturation temperature $T_{SAT}$, e.g. a sensor for measuring the cooling-media temperature and a feed-back controller comparing the measured temperature with a target temperature and adjusting the temperature, or the flow, of the cooling media to counteract any difference between the measured and the target temperature. Common methods for creating movement of the cooling media to increase heat transfer from the container undergoing saturation can be applied, such as actively creating circulation of the cooling media in the trough by means of a pump or propeller. Ammonia is supplied as pressurized gas to the inside of the storage containers.

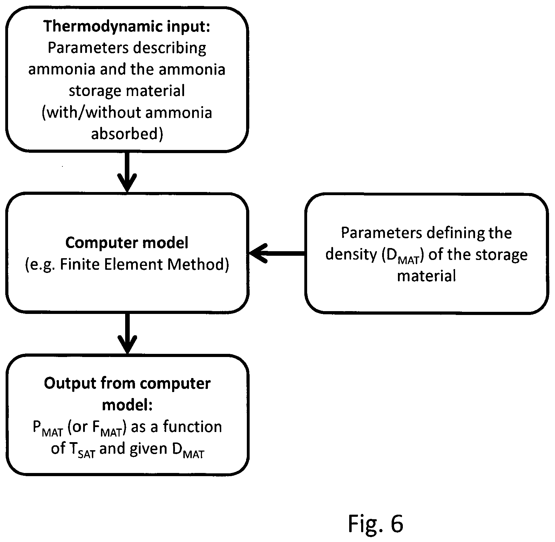

Figure 6 shows a diagram of a simulation method to estimate or predict the relationship between $T_{SAT}$, $D_{MAT}$ and the resulting pressure $P_{MAT}$ (or $F_{MAT}$). Relevant parameters describing ammonia and the ammonia storage material (with/without ammonia absorbed), referred to as "Thermodynamic input", and independent variables as well as the density, $D_{MAT}$ of the ammonia storage material are fed to a computer model such as a Finite Element Method (FEM) simulation. For example, the computer model outputs $P_{MAT}$ (or $F_{MAT}$) as a function of $T_{SAT}$ and given $D_{MAT}$. This enables a minimum temperature $T_{SATMIN}$ to be identified of the saturation/resaturation process where $P_{MAT}$ (or $F_{MAT}$) exerted by the storage material is kept below the limit for the mechanical strength in terms of $P_{LIMIT}$, or $F_{LIMIT}$, of the container.

FURTHER EXAMPLES

**EXAMPLE 1:** Procedure for determining forces from saturation at various temperatures, and finding a minimum saturation temperature $T_{SATMIN}$ for a given cartridge

In order to determine the relation between temperature, material density and saturation forces from ammonia storage material several experiments were conducted following a general procedure:

A predetermined mass of dry $SrCl_2$ powder was loaded in a reactor volume, which was then closed. The mass of $SrCl_2$ was determined to yield a certain density, $D_{MAT}$, after saturation of $SrCl_2$ with ammonia. It was determined by multiplying the density by the volume of the reactor and dividing by the molar mass of fully saturated $Sr(NH_3)_8Cl_2$ and multiplying by the molar mass of $SrCl_2$.

The closed-off reactor was evacuated to remove ambient air and then subjected to a pressure of ammonia gas. The uptake of ammonia was followed by weighing the reactor and it was in this way ensured that the $SrCl_2$ was completely saturated by ammonia. During the uptake the force of the saturating $SrCl_2$ acting one end of the reactor was measured using a load cell. The temperature of the reactor walls were actively controlled using Peltier-elements.

After complete saturation the reactor was heated and the pressure at the outlet fixed to just above ambient pressure to degas ammonia from the reactor. The material was degassed for a fixed time before a pressure of ammonia was applied again to resaturate the material. In this way a sample could be recycled several times and the force measurement could be conducted for several temperature points.

To create the full map of the force for various temperatures and densities the reactor was loaded several times with various mass of $SrCl_2$ each cycled at various temperature points.

This procedure could be made for any relevant material capable of absorbing ammonia reversibly. Other examples of suitable ammonia storage materials are CaCl2, BaCl2 or any other metal ammine complex in pure form or as a mixture of salts. The typical formula for metal ammine complexes is: $M(NH_3)_XH_Y$ where M is a metal ion, X is the coordination number for ammonia (from 0 up to 8 or even 12 in some salts), H is a halide (e.g. chloride ion) and Y is the number of halide ions in the complex. In saturated form the SrCl2 and CaCl2 salts absorb 8 ammonia molecules ($Sr(NH_3)_8Cl_2$ or $Ca(NH_3)_8Cl_2$.

With a given limit for the mechanical strength of the given cartridge in terms of $P_{LIMIT}$, or $F_{LIMIT}$, under which the walls of cartridge do not undergo plastic deformation, or do not undergo deformation of more than 110%, 120%, 150%, or 200% of the deformation at the yield point of the container walls, and a given target density $D_{MAT}$ of ammonia-storage material in the cartridge, a relation of this type is used to identify a minimum temperature $T_{SATMIN}$ of the saturation/resaturation process where $P_{MAT}$, or $F_{MAT}$, exerted by the storage material is kept below the limit for the mechanical strength, of the cartridge. Having found $T_{SATMIN}$ for the given $P_{LIMIT}$ and $D_{MAT}$ the saturation/resaturation process is carried out at a temperature $T_{SAT}$ fulfilling the condition $T_{SAT} \geq T_{SATMIN}$.

**EXAMPLE 2: Finding a metal wall thickness based on a fixed saturation, temperature, and storage-material density.**

A refill process has been established to refill cartridges at a temperature of 20° C. The ammonia storage material density given is 1175 g/cm$^3$, which gives a material pressure $P_{MAT}$ = 3.2 MPa. The cartridge is cylindrical, with an outer diameter of 178 mm due to requirements of available space on certain vehicles on the market. It is decided to make the cartridge from a deep-drawn aluminum-alloy casing. After deep-drawing, the aluminum alloy has a yield strength of 170 MPa; the "yield strength", or "yield point" is defined to be the stress at which a material begins to deform plastically. Prior to the yield point the material will deform elastically and will return to its original shape when the applied stress is removed. Once the yield point is passed, some fraction of the deformation will be permanent and non-reversible.

The minimum shell thickness of the cylinder can now be determined by the thin-walled assumption:

$$t = \frac{\sqrt{\frac{Pd^2}{\sigma} + d^2} - d}{2} = \frac{\sqrt{\frac{3.2MPa \cdot (178mm)^2}{170MPa} + (178mm)^2} - 178mm}{2} = 0.83\ mm$$

**EXAMPLE 3:**

Given a certain design pressure and design temperature, the allowable stress (from vessel material) and required vessel radius (from volume), a common approach is the design by a rule method, following design rules such as the ASME Boiler and Pressure Vessel Code; ASME Section VIII Division 1.

The ASME design code gives for a thin walled design R/t >= 10 (R = vessel radius, t = wall thickness) the following design formulas for cylindrical shell minimum wall thickness requirement.

Considering circumferential stress:

$$t = \frac{P * Ro}{S * E + 0,4 * P}$$

Considering longitudinal stress:

$$t = \frac{P * Ro}{2 * S * E + 1,4 * P}$$

t = Wall thickness (in.)
P = Design pressure (psi)
Ro = Outside radius (in.)
S = Allowable stress (psi)
E = Weld joint efficiency factor

Similarly the allowable pressure can be calculated using the ASME code and design by rule method. Given a design temperature, allowable stress (from vessel material), vessel radius (from volume) and wall thickness, the following formulas provide the maximum allowable pressure.

Considering circumferential stress:

$$P = \frac{S * E * t}{Ro - 0.4 * t}$$

Considering longitudinal stress:

$$P = \frac{2 * S * E * t}{Ro - 1.4 * t}$$

By way of example, the allowable pressure based on given vessel material and geometry is calculated for a thin walled deep drawn cylindrical aluminum shell.
t = 3 mm = 0.118 in
Ro = 98 mm = 3.504 in
S = 133.3 MPa = 16437.6 psi (based on yield strength of Aluminum alloy at 170 MPa, and a safety factor of normally 1.5 according to ASME code)
E = 1
Allowable pressure based on circumferential stress:

$$P = \frac{16437.6 psi * 1 * 0.118 in}{3.504 in - 0.4 * 0.118 in} = 561.6 \; psi = 3.9 \; Mpa$$

Allowable pressure based on longitudinal stress:

$$P = \frac{2 * 16437.6 psi * 1 * 0.118 in}{3.504 in - 1.4 * 0.118 in} = 1163.0 \; psi = 8.0 \; Mpa$$

Taking the lowest value from the calculations above gives allowable pressure 3.9 MPa.
Furthermore, there is, as mentioned above, a design safety factor of 1.5 in the calculation. This leads to an allowable pressure $P_{LIMIT}$ of 3.9 MPa / 1.5 = 2.6 MPa. Using the correlation of figure 2 for a density of DMAT-C a value of the minimum temperature $T_{SATMIN}$ at which the saturation/resaturation process is to be carried of approx. 40 °C for this specific value of $D_{MAT}$ is obtained.

**Claims**

1. A method for controlling the magnitude of mechanical forces exerted by a solid ammonia storage material on walls of a container holding the storage material inside its interior volume when the storage material is undergoing saturation/resaturation with ammonia inside said storage container, said method comprising:

   a. determining a limit for the mechanical strength of the container in terms of a hydraulic pressure, hereinafter $P_{LIMIT}$, or a hydraulic force, hereinafter $F_{LIMIT}$, in its interior volume under which the walls of container do not undergo plastic deformation, or do not undergo deformation of more than 200% of a deformation at a yield point of the container walls;
   b. using a relationship between

      i. a temperature for ammonia saturation/resaturation process of the storage material, hereinafter $T_{SAT}$, and
      ii. the hydraulic pressure $P_{MAT}$, or equivalent mechanical force $F_{MAT}$ generated by the storage material during saturation/resaturation at said temperature $T_{SAT}$,

   to identify a minimum temperature, hereinafter $T_{SATMIN}$, of the saturation/resaturation process where $P_{MAT}$, or $F_{MAT}$, exerted by the storage material is kept below the limit for the mechanical strength in terms of $P_{LIMIT}$, or $F_{LIMIT}$, of the container by carrying out the saturation/resaturation process at the temperature $T_{SAT}$ fulfilling the condition of $T_{SAT} \geq T_{SATMIN}$, the relationship being established by an experimental mapping procedure in which experimental data points are obtained, or via computer simulations.

2. The method according to claim 1 wherein the storage material has a density, hereinafter $D_{MAT}$, in wherein in the determination of $T_{SATMIN}$, besides using the relationship between $T_{SAT}$ and $P_{MAT}$; or $F_{MAT}$, also a relationship with the density $D_{MAT}$ of the storage material is taken into account, as a higher density $D_{MAT}$ generally leads to higher mechanical forces exerted by the solid ammonia storage material on the walls of the container, where $D_{MAT}$ refers to the density of the ammonia storage material being fully saturated with ammonia.

3. The method according to claim 1 or 2 wherein the ammonia storage material is cooled during the saturation/resaturation process by a liquid cooling media having a boiling point, and wherein the saturation/resaturation process at the temperature $T_{SAT}$ fulfills the condition $T_{CMBP} \geq T_{SAT} \geq T_{SATMIN}$, where $T_{CMBP}$ is the boiling point of the cooling media.

4. The method according to claim 1 or 2 wherein the ammonia storage material is cooled during the saturation/resaturation process by a gaseous cooling media, and wherein the saturation/resaturation process at the temperature $T_{SAT}$ fulfills the condition $T_{CMBP} \geq T_{SAT} \geq T_{SATMIN}$, where $T_{CMBP}$ is an upper limit on the temperature at which the saturation/resaturation process is performed cooled by the gaseous cooling media.

5. The method according to claim 3 or 4 wherein $T_{CMBP}$ is 100° C.

6. The method according to any one of claims 1 to 5 wherein the container has a mechanical strength which enables the container to withstand the pressure generated by desorbed ammonia at 85° C with a volumetric expansion no greater than 0.1 volume-%.

7. The method according to claim 6, wherein the pressure generated by desorbed ammonia from the storage material at 85° C is 12 bar.

8. The method according to any one of claims 2 to 7 where $P_{LIMIT}$, or $F_{LIMIT}$, and subsequently $T_{SATMIN}$ are determined from:

   a. having an existing container design available,
   b. knowing from the existing design the value of $P_{LIMIT}$, or $F_{LIMIT}$, or using (i) standard mechanical engineering practice, (ii) hydraulic pressure measurements, or (iii) mechanical simulations to identity the value of $P_{LIMIT}$, or $F_{LIMIT}$, and
   c. using the known or identified $P_{LIMIT}$, or $F_{LIMIT}$, to determine the loading density DMAT and the saturation/resaturation condition $T_{SAT} \geq T_{SATMIN}$, or $T_{CMBP} \geq T_{SAT} \geq T_{SATMIN}$, to prevent $P_{MAT}$, or $F_{MAT}$, from exceeding $P_{LIMIT}$, or $F_{LIMIT}$.

9. The method according to any one of claims 1 to 8 where the procedure of determining $T_{SATMIN}$ includes the experimental mapping procedure in which experimental data points are obtained to establish empirically the relationship between the dependent variable $P_{MAT}$, and the independent variable $T_{SAT}$, said procedure comprising

   a. preparing at least one sample of ammonia storage material;
   b. carrying out ammonia desorption and resaturation experiments in a sample holder capable of measuring $P_{MAT}$ exerted by the material on the walls of the sample holder when the material is undergoing saturation/resaturation, said procedure being carried out at different temperature levels $T_{SAT}$;
   c. using the experimental data points to generate a function or interpolation formula $P_{MAT} = f(T_{SAT})$, or $F_{MAT} = f(T_{SAT})$.

10. The method according to any one of claims 2 to 8 where the procedure of determining $T_{SATMIN}$ includes the experimental mapping procedure in which experimental data points are obtained to establish empirically the relationship between the dependent variable $P_{MAT}$, or $F_{MAT}$, and the independent variables $T_{SAT}$ and $D_{MAT}$, said procedure comprising:

    a. preparing at least one sample of ammonia storage material with known density $D_{MAT}$;
    b. carrying out ammonia desorption and resaturation experiments in a sample holder capable of measuring $P_{MAT}$ exerted by the material on the walls of the sample holder when it the material is undergoing saturation/resaturation, said procedure being carried out at different temperature levels $T_{SAT}$;
    c. using the experimental data points to generate a function or interpolation formula $P_{MAT} = f(T_{SAT}, D_{MAT})$, or $F_{MAT} = f(T_{SAT}, D_{MAT})$ in the case where samples with different densities $D_{MAT}$ are measured.

11. The method according to any one of claims 1 to 10 where the procedure of determining $T_{SATMIN}$ is done by creating the relationship between $P_{MAT}$, or FMAT, and $T_{SAT}$ via computer simulations using parameters describing the ammonia storage material, ammonia itself, and the storage material in saturated form.

**12.** The method according to any one of claims 2 to 10 where the procedure of determining $T_{SATMIN}$ is done by creating the relationship between $P_{MAT}$, or $F_{MAT}$, and $T_{SAT}$ and $D_{MAT}$ via computer simulations using parameters describing the ammonia storage material, ammonia itself, and the storage material in saturated form.

**13.** The method according to any one of claims 1 to 12 where the limit for the mechanical strength of the container in terms of the hydraulic pressure $P_{LIMIT}$ or the hydraulic force $F_{LIMIT}$ in its interior volume is the limit under which the walls of container do not undergo deformation of more than 110%, 120%, or 150% of the deformation at the yield point of the container walls.


**Patentansprüche**

**1.** Verfahren zum Steuern der Stärke von mechanischen Kräften, die von einem Feststoff-Ammoniak-Speichermaterial auf Wände eines Behälters, der das Speichermaterial innerhalb seines inneren Volumens aufnimmt, ausgeübt werden, wenn das Speichermaterial innerhalb des Speicherbehälters eine Sättigung/erneute Sättigung mit Ammoniak durchläuft, wobei das Verfahren Folgendes umfasst:

a. Feststellen eines Grenzwerts für die mechanische Festigkeit des Behälters, ausgedrückt durch einen hydraulischen Druck, im Folgenden $P_{LIMIT}$, oder eine hydraulische Kraft, im Folgenden $F_{LIMIT}$, in seinem inneren Volumen, bei dem oder der die Wände des Behälters keine plastische Verformung erfahren oder keine Verformung von mehr als 200% einer Verformung bei einer Fließgrenze der Behälterwände erfahren;
b. Verwenden einer Beziehung zwischen:

I. einer Temperatur für einen Prozess zur Sättigung/erneuten Sättigung mit Ammoniak des Speichermaterials, im Folgenden $T_{SAT}$, und
II. dem hydraulischen Druck $P_{MAT}$, oder der entsprechenden mechanischen Kraft $F_{MAT}$, der oder die vom Speichermaterial während der Sättigung/erneuten Sättigung bei der Temperatur $T_{SAT}$ erzeugt wird,

zum Bestimmen einer minimalen Temperatur, im Folgenden $T_{SATMIN}$, für den Prozess zur Sättigung/erneuten Sättigung, bei der $P_{MAT}$ oder $F_{MAT}$, der oder die vom Speichermaterial ausgeübt wird, unterhalb des Grenzwerts für die mechanische Festigkeit, ausgedrückt durch $P_{LIMIT}$ oder $F_{LIMIT}$, des Behälters gehalten wird, indem der Prozess zur Sättigung/erneuten Sättigung bei einer Temperatur $T_{SAT}$ ausgeführt wird, die die Bedingung $T_{SAT} \geq T_{SATMIN}$ erfüllt, wobei die Beziehung durch einen experimentellen Zuordnungsvorgang ermittelt wird, bei dem experimentelle Datenpunkte erhalten werden, oder durch Computersimulationen.

**2.** Verfahren nach Anspruch 1, wobei das Speichermaterial eine Dichte, im Folgenden DMAT, hat, und wobei bei der Feststellung von $T_{SATMIN}$, neben der Verwendung der Beziehung zwischen $T_{SAT}$ und $P_{MAT}$, oder $F_{MAT}$, auch eine Beziehung zur Dichte $D_{MAT}$ des Speichermaterials berücksichtigt wird, da eine höhere Dichte $D_{MAT}$ im Allgemeinen zu größeren mechanischen Kräften führt, die durch das Feststoff-Ammoniak-Speichermaterial auf die Wände des Behälters ausgeübt werden, wobei $D_{MAT}$ sich auf die Dichte des Ammoniak-Speichermaterials, das vollständig mit Ammoniak gesättigt ist, bezieht.

**3.** Verfahren nach Anspruch 1 oder 2, wobei das Ammoniak-Speichermaterial während des Prozesses zur Sättigung/erneuten Sättigung durch ein flüssiges Kühlungsmedium gekühlt wird, das einen Siedepunkt hat, und wobei der Prozess zur Sättigung/erneuten Sättigung bei der Temperatur $T_{SAT}$ die Bedingung $T_{CMBP} \geq T_{SAT} \geq T_{SATMIN}$ erfüllt, wobei $T_{CMBP}$ der Siedepunkt des Kühlungsmediums ist.

**4.** Verfahren nach Anspruch 1 oder 2, wobei das Ammoniak-Speichermaterial während des Prozesses zur Sättigung/erneuten Sättigung durch ein gasförmiges Kühlungsmedium gekühlt wird und wobei der Prozess zur Sättigung/erneuten Sättigung bei der Temperatur $T_{SAT}$ die Bedingung $T_{CMBP} \geq T_{SAT} \geq T_{SATMIN}$ erfüllt, wobei $T_{CMBP}$ ein oberer Grenzwert für die Temperatur ist, bei der der Prozess zur Sättigung/erneuten Sättigung gekühlt durch das gasförmige Kühlungsmedium ausgeführt wird.

**5.** Verfahren nach Anspruch 3 oder 4, wobei $T_{CMBP}$ 100°C beträgt.

**6.** Verfahren nach einem der Ansprüche 1 bis 5, wobei der Behälter eine mechanische Festigkeit hat, die es dem Behälter ermöglicht dem Druck standzuhalten, der durch das desorbierte Ammoniak bei 85°C mit einer volumetrischen Ausdehnung von nicht mehr als 0,1 Volumen-% erzeugt wird.

7. Verfahren nach Anspruch 6, wobei der durch desorbiertes Ammoniak vom Speichermaterial bei 85°C erzeugte Druck 12 bar beträgt.

8. Verfahren nach einem der Ansprüche 2 bis 7, wobei $P_{LIMIT}$, oder $F_{LIMIT}$, und anschließend $T_{SATMIN}$ durch Folgendes bestimmt werden:

    a. ein bestehendes Behälterdesign ist verfügbar,
    b. aus dem bestehenden Design ist der Wert für $P_{LIMIT}$, oder $F_{LIMIT}$, bekannt oder es wird Folgendes verwendet: (i) übliche Verfahren aus dem Maschinenbau, (ii) Messungen des hydraulischen Drucks oder (iii) mechanische Simulationen zum Feststellen der Werte für $P_{LIMIT}$, oder $F_{LIMIT}$, und
    c. Verwenden des bekannten oder festgestellten $P_{LIMIT}$, oder $F_{LIMIT}$, zum Feststellen der Ladedichte $D_{MAT}$ und der Bedingung zur Sättigung/erneuten Sättigung $T_{SAT} \geq T_{SATMIN}$ oder $T_{CMBP} \geq T_{SAT} \geq T_{SATMIN}$, um zu verhindern, dass $P_{MAT}$, oder $F_{MAT}$, $P_{LIMIT}$, oder $F_{LIMIT}$, übersteigt.

9. Verfahren nach einem der Ansprüche 1 bis 8, wobei der Vorgang zum Bestimmen von $T_{SATMIN}$ den experimentellen Zuordnungsvorgang umfasst, bei dem experimentelle Datenpunkte erhalten werden, um empirisch die Beziehung zwischen der abhängigen Variable $P_{MAT}$ und der unabhängigen Variable $T_{SAT}$ herzustellen, wobei der Vorgang Folgendes umfasst:

    a. Vorbereiten wenigstens einer Probe von Ammoniak-Speichermaterial;
    b. Ausführen von Experimenten zur Ammoniak-Desorption und erneuten Sättigung in einem Probenbehälter, der dafür eingerichtet ist, $P_{MAT}$ zu messen, der vom Material auf die Wände des Probenbehälters ausgeübt wird, wenn das Material eine Sättigung/erneute Sättigung durchläuft, wobei der Vorgang bei verschiedenen Temperaturwerten $T_{SAT}$ ausgeführt wird;
    c. Verwenden der experimentellen Datenpunkte, um eine Funktion oder Interpolationsformel $P_{MAT} = f(T_{SAT})$, oder $F_{MAT} = f(T_{SAT})$, zu erzeugen.

10. Verfahren nach einem der Ansprüche 2 bis 8, wobei der Vorgang zum Bestimmen von $T_{SATMIN}$ den experimentellen Zuordnungsvorgang umfasst, bei dem experimentelle Datenpunkte erhalten werden, um empirisch die Beziehung zwischen der abhängigen Variable $P_{MAT}$, oder $F_{MAT}$, und den unabhängigen Variablen $T_{SAT}$ und $D_{MAT}$ herzustellen, wobei der Vorgang Folgendes umfasst:

    d. Vorbereiten wenigstens einer Probe von Ammoniak-Speichermaterial mit bekannter Dichte $D_{MAT}$;
    e. Ausführen von Experimenten zur Ammoniak-Desorption und erneuten Sättigung in einem Probenbehälter, der dafür eingerichtet ist, $P_{MAT}$ zu messen, der vom Material auf die Wände des Probenbehälters ausgeübt wird, wenn das Material eine Sättigung/erneute Sättigung durchläuft, wobei der Vorgang bei verschiedenen Temperaturwerten $T_{SAT}$ ausgeführt wird;
    f. Verwenden der experimentellen Datenpunkte, um eine Funktion oder Interpolationsformel $P_{MAT} = f(T_{SAT}, D_{MAT})$, oder $F_{MAT} = f(T_{SAT}, D_{MAT})$, zu erzeugen, falls Proben mit verschiedenen Dichten $D_{MAT}$ gemessen werden.

11. Verfahren nach einem der Ansprüche 1 bis 10, wobei der Vorgang zum Bestimmen von $T_{SATMIN}$ durch das Erzeugen der Beziehung zwischen $P_{MAT}$, oder $F_{MAT}$, und $T_{SAT}$ durch Computersimulationen ausgeführt wird, die Parameter verwenden, die das Ammoniak-Speichermaterial, das Ammoniak selber und das Speichermaterial in gesättigter Form beschreiben.

12. Verfahren nach einem der Ansprüche 2 bis 10, wobei der Vorgang zum Bestimmen von $T_{SATMIN}$ durch das Erzeugen der Beziehung zwischen $P_{MAT}$, oder $F_{MAT}$, und $T_{SAT}$ und $D_{MAT}$ durch Computersimulationen ausgeführt wird, die Parameter verwenden, die das Ammoniak-Speichermaterial, das Ammoniak selber und das Speichermaterial in gesättigter Form beschreiben.

13. Verfahren nach einem der Ansprüche 1 bis 12, wobei der Grenzwert für die mechanische Festigkeit des Behälters, ausgedrückt durch den hydraulischen Druck $P_{LIMIT}$ oder die hydraulische Kraft $F_{LIMIT}$ in seinem inneren Volumen, der Grenzwert ist, bei dem die Wände des Behälters keine Verformung von mehr als 110%, 120% oder 150% der Verformung bei der Fließgrenze der Behälterwände erfahren.

**Revendications**

1. Procédé de régulation de l'amplitude de forces mécaniques exercées par un matériau de stockage d'ammoniac solide sur les parois d'un récipient contenant le matériau de stockage à l'intérieur de son volume intérieur lorsque le matériau de stockage subit une saturation/resaturation avec de l'ammoniac à l'intérieur dudit récipient de stockage, ledit procédé comprenant :

   a. La détermination d'une limite pour la résistance mécanique du récipient en termes de pression hydraulique, ci-après $P_{LIMIT}$, ou une force hydraulique, ci-après $F_{LIMIT}$, dans son volume intérieur au-dessous de laquelle les parois de récipient ne subissent pas une déformation plastique, ou ne subissent pas une déformation de plus de 200 % d'une déformation à une limite élastique des parois du récipient;
   b. l'utilisation d'une relation entre

      i. une température pour le processus de saturation/resaturation d'ammoniac du matériau de stockage, ci-après $T_{SAT}$, et
      ii. la pression hydraulique $P_{MAT}$, ou une force mécanique équivalente $F_{MAT}$ générée par le matériau de stockage pendant une saturation/resaturation à ladite température $T_{SAT}$,

   pour identifier une température minimale, ci-après $T_{SATMIN}$, du processus de saturation/resaturation où $P_{MAT}$, ou $F_{MAT}$, exercé par le matériau de stockage est maintenu au-dessous de la limite pour la résistance mécanique en termes de $P_{LIMIT}$, ou $F_{LIMIT}$ du récipient par conduite du processus de saturation/resaturation à la température $T_{SAT}$ satisfaisant à la condition de $T_{SAT} \geq T_{SATMIN}$, la relation étant établie par une procédure de mise en correspondance expérimentale dans laquelle des points de données expérimentaux sont obtenus, ou par l'intermédiaire de simulations informatiques.

2. Procédé selon la revendication 1, dans lequel le matériau de stockage a une masse volumique, ci-après $D_{MAT}$, dans lequel, dans la détermination de $T_{SATMIN}$, hormis l'utilisation de la relation entre $T_{SAT}$ et $P_{MAT}$, ou $F_{MAT}$, une relation avec la masse volumique $D_{MAT}$ du matériau de stockage est également prise en compte, étant donné qu'une masse volumique $D_{MAT}$ plus élevée conduit généralement à des forces mécaniques plus élevées exercées par le matériau de stockage d'ammoniac solide sur les parois du récipient, où $D_{MAT}$ désigne la masse volumique du matériau de stockage d'ammoniac étant totalement saturé avec de l'ammoniac.

3. Procédé selon la revendication 1 ou 2, dans lequel le matériau de stockage d'ammoniac est refroidi pendant le processus de saturation/resaturation par un milieu de refroidissement liquide ayant un point d'ébullition, et dans lequel le processus de saturation/resaturation à la température $T_{SAT}$ remplit la condition $T_{CMBP} \geq T_{SAT} \geq T_{SATMIN}$, où $T_{CMBP}$ est le point d'ébullition du milieu de refroidissement.

4. Procédé selon la revendication 1 ou 2 dans lequel le matériau de stockage d'ammoniac est refroidi pendant le processus de saturation/resaturation par un milieu de refroidissement gazeux, et dans lequel le processus de saturation/resaturation à la température $T_{SAT}$ satisfait à la condition $T_{CMBP} \geq T_{SAT} \geq T_{SATMIN}$, où $T_{CMBP}$ est une limite supérieure de la température à laquelle le processus de saturation/resaturation est effectué en étant refroidi par le milieu de refroidissement gazeux.

5. Procédé selon la revendication 3 ou 4 dans lequel $T_{CMBP}$ est 100 °C.

6. Procédé selon l'une quelconque des revendications 1 à 5, dans lequel le récipient a une résistance mécanique qui permet au récipient de supporter la pression générée par l'ammoniac désorbé à 85 °C avec une dilatation volumétrique de pas plus de 0,1 % en volume.

7. Procédé selon la revendication 6, dans lequel la pression générée par l'ammoniac désorbé du matériau de stockage à 85 °C est de 12 bar.

8. Procédé selon l'une quelconque des revendications 2 à 7 où $P_{LIMIT}$, ou $F_{LIMIT}$, et ensuite $T_{SATMIN}$ sont déterminés à partir de :

   a. la disponibilité d'une conception de réception existante,
   b. la connaissance à partir de la conception existante de la valeur de $P_{LIMIT}$, ou $F_{LIMIT}$, ou l'utilisation (i) de la pratique de génie mécanique standard, (ii) de mesures de pression hydraulique, ou (iii) de simulations mécaniques pour identifier la valeur de $P_{LIMIT}$, ou $F_{LIMIT}$, et

c. l'utilisation de $P_{LIMIT}$, ou $F_{LIMIT}$, connu ou identifié pour déterminer la masse volumique de chargement $D_{MAT}$ et la condition de saturation/resaturation $T_{SAT} \geq T_{SATMIN}$, ou $T_{CMBP} \geq T_{SAT} \geq T_{SATMIN}$, pour empêcher $P_{MAT}$, ou $F_{MAT}$, de dépasser $P_{LIMIT}$, ou $F_{LIMIT}$.

9. Procédé selon l'une quelconque des revendications 1 à 8, dans lequel la procédure de détermination de $T_{SATMIN}$ comprend la procédure de mise en correspondance expérimentale dans laquelle des points de données expérimentaux sont obtenus pour établir empiriquement la relation entre la variable dépendante $P_{MAT}$, et la variable indépendante $T_{SAT}$, ladite procédure comprenant

a. la préparation d'au moins un échantillon de matériau de stockage d'ammoniac ;
b. la conduite d'une désorption d'ammoniac et d'essais de resaturation dans un support d'échantillon capable de mesurer $P_{MAT}$ exercé par le matériau sur les parois du support d'échantillon lorsque le matériau subit une saturation/resaturation, ladite procédure étant conduite à différents niveaux de température $T_{SAT}$ ;
c. l'utilisation des points de données expérimentaux pour générer une fonction ou une formule d'interpolation $P_{MAT} = f(T_{SAT})$, ou $F_{MAT} = f(T_{SAT})$.

10. Procédé selon l'une quelconque des revendications 2 à 8 où la procédure de détermination de $T_{SATMIN}$ comprend la procédure de mise en correspondance expérimentale dans laquelle des points de données expérimentaux sont obtenus pour établir empiriquement la relation entre la variable dépendante $P_{MAT}$, ou $F_{MAT}$, et les variables indépendantes $T_{SAT}$ et $D_{MAT}$, ladite procédure comprenant :

a. la préparation d'au moins un échantillon de matériau de stockage d'ammoniac ayant une masse volumique connue $D_{MAT}$ ;
b. la conduite d'essais de désorption et de resaturation d'ammoniac dans un support d'échantillon capable de mesurer $P_{MAT}$ exercé par le matériau sur les parois du support d'échantillon lorsque le matériau subit une saturation/resaturation, ladite procédure étant conduite à différents niveaux de température $T_{SAT}$ ;
c. l'utilisation des points de données expérimentaux pour générer une fonction ou une formule d'interpolation $P_{MAT} = f(T_{SAT}, D_{MAT})$, ou $F_{MAT} = f(T_{SAT}, D_{MAT})$ dans le cas où des échantillons ayant différentes masses volumiques $D_{MAT}$ sont mesurés.

11. Procédé selon l'une quelconque des revendications 1 à 10, dans lequel la procédure de détermination de $T_{SATMIN}$ est effectuée par création de la relation entre $P_{MAT}$, ou $F_{MAT}$, et $T_{SAT}$ par l'intermédiaire de simulations informatiques utilisant des paramètres décrivant le matériau de stockage d'ammoniac, l'ammoniac lui-même et le matériau de stockage sous forme saturée.

12. Procédé selon l'une quelconque des revendications 2 à 10, dans lequel la procédure de détermination de $T_{SATMIN}$ est effectuée par création de la relation entre $P_{MAT}$, ou $F_{MAT}$, et $T_{SAT}$ et $D_{MAT}$ par l'intermédiaire de simulations informatiques utilisant des paramètres décrivant le matériau de stockage d'ammoniac, l'ammoniac lui-même et le matériau de stockage sous forme saturée.

13. Procédé selon l'une quelconque des revendications 1 à 12, dans lequel la limite pour la résistance mécanique du récipient en termes de pression hydraulique $P_{LIMIT}$ ou de force hydraulique $F_{LIMIT}$ dans son volume intérieur est la limite au-dessous de laquelle les parois de récipient ne subissent pas une déformation de plus de 110 %, 120 %, ou 150 % de la déformation à la limite élastique des parois du récipient.

Fig. 1

$P_{SAT} = 7-9$ bar ($NH_3$)

Data points and model correlation:
$P_{MAT} = A*exp(B*T_{SAT} + C*D_{MAT})$

Model ($D_{MAT-A}$)
Model ($D_{MAT-B}$)
✱ Data ($D_{MAT-C}$)
Model ($D_{MAT-C}$)
Model ($D_{MAT-D}$)
◆ Data ($D_{MAT-A}$)
▲ Data ($D_{MAT-B}$)
✚ Data ($D_{MAT-D}$)

$P_{LIMIT-1}, D_{MAT-A}$
$P_{LIMIT-2}, D_{MAT-A}$
$P_{LIMIT-3}, D_{MAT-D}$

$P_{MAT}$(MPa)

$T_{SAT}$ (°C)

$T_{SATMIN-1A}$
$T_{SATMIN-2A}$
$T_{SATMIN-3D}$

Fig. 2

EP 3 078 635 B1

Fig. 3

Fig. 4

NH₃ gas supply

Device for creating movement of the cooling media to get more efficient heat removal from the containers

Container with storage material

Cooling media (e.g. water)

Heat exchanger or similar device or method for removal of heat and control of $T_{SAT}$ during the NH₃-absorption process

Fig. 5

```
┌─────────────────────────────┐
│   Thermodynamic input:      │
│   Parameters describing     │
│ ammonia and the ammonia     │
│     storage material        │
│  (with/without ammonia      │
│       absorbed)             │
└─────────────────────────────┘
              │
              ▼
┌─────────────────────────────┐        ┌─────────────────────────────┐
│     Computer model          │◄───────│  Parameters defining the    │
│ (e.g. Finite Element Method)│        │ density ($D_{MAT}$) of the storage │
│                             │        │        material              │
└─────────────────────────────┘        └─────────────────────────────┘
              │
              ▼
┌─────────────────────────────┐
│   Output from computer      │
│         model:              │
│ $P_{MAT}$ (or $F_{MAT}$) as a function │
│  of $T_{SAT}$ and given $D_{MAT}$     │
└─────────────────────────────┘
```

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006012903 A2
- EP 2181963 A1
- WO 2010025947 A1
- WO 2014023841 A1
- US 20110284121 A1
- US 20130209316 A1

### Non-patent literature cited in the description

- Report of the Sub-Committee of Experts on the Transport of Dangerous Goods on its forty-fourth session. United Nations standardization document ST/SG/AC.10/C.3/88. 12 December 2013